# EUROPEAN PATENT APPLICATION

(11) **EP 4 394 576 A1**
(43) Date of publication of application: **03.07.2024**
(21) Application number: 23215813.9
(22) Date of filing: 12.12.2023
(51) Int. Cl.: G06F 3/06

(54) **APPARATUS AND METHODS FOR ACCESSING DATA AT A STORAGE NODE**

(30) Priority: 27.12.2022 US 202263435545 P; 29.09.2023 US 202318375449
(71) Applicant: Samsung Electronics Co., Ltd., Suwon-si, Gyeonggi-do 16677 (KR)
(72) Inventor: KI, Yang Seok, San Jose, CA, 95134 (US); PARK, Chanik, San Jose, CA, 95134 (US); RYU, Sungwook, San Jose, CA, 95134 (US)
(74) Representative: Kuhnen & Wacker Patent- und Rechtsanwaltsbüro PartG mbB

(57) **Abstract**

An apparatus may include a storage node including a first interface to communicate with a first memory medium, a second interface to communicate with a second memory medium, and at least one control circuit configured to transmit, from the storage node, location information for data stored in the first memory medium, and transfer, from the storage node, using a memory access scheme, the data. The at least one control circuit may be configured to operate at least a portion of the first memory medium as a cache for at least a portion of the second memory medium. The at least one control circuit may be configured to transmit the location information using the memory access scheme. The at least one control circuit may be configured to update the location information to generate updated location information, and perform a transmission, from the storage node, of the updated location information.

## Description

### TECHNICAL FIELD

This disclosure relates generally to accessing data, and more specifically to systems, methods, and apparatus for accessing data from memory or storage at a storage node.

### BACKGROUND

A storage node may include one or more storage devices configured to store data. The storage node may process requests to access the one or more storage devices. For example, the storage node may process a write request by storing write data in at least one of the one or more storage devices. As another example, the storage node may process a read request by retrieving the requested data from at least one of the one or more storage devices and returning the retrieved data with a response to the read request.

The above information disclosed in this Background section is only for enhancement of understanding of the background of the inventive principles and therefore it may contain information that does not constitute prior art.

### SUMMARY

An apparatus comprising, a storage node comprising, a first interface to communicate with a first memory medium, a second interface to communicate with a second memory medium and at least one control circuit configured to, transmit, from the storage node, location information for data stored in the first memory medium and transfer, from the storage node, using a memory access scheme, the data.

In one embodiment the at least one control circuit is configured to operate at least a portion of the first memory medium as a cache for at least a portion of the second memory medium.

In one embodiment the at least one control circuit is configured to transmit the location information using the memory access scheme.

In one embodiment the at least one control circuit is configured to receive a request for the location information and transmit the location information based on the request.

In one embodiment the at least one control circuit is configured to update the location information to generate updated location information and perform a transmission, from the storage node, of the updated location information.

In one embodiment the transmission of the updated location information is caused by the storage node.

In one embodiment the at least one control circuit is configured to receive a request to transfer the data and transfer, based on the request, from the storage node, using the memory access scheme, the data.

In one embodiment the request to transfer the data comprises a command.

In one embodiment the storage node comprises a network adapter and the network adapter comprises at least a portion of the memory access scheme.

An apparatus comprises a node comprising at least one control circuit configured to send, from the node, data, receive, at the node, location information for the data and transfer, based on the location information, using a memory access scheme, the data to the node.

In one embodiment the location information identifies a memory medium.

In one embodiment the location information identifies a location within the memory medium.

In one embodiment the location information identifies a cache for the data.

In one embodiment the at least one control circuit is configured to send, from the node, a request for the location information and receive, at the node, based on the request, the location information.

In one embodiment the at least one control circuit is configured to store a data structure comprising the location information.

In one embodiment the at least one control circuit is configured to receive, at the node, updated location information and modify, based on the updated location information, the data structure.

In one embodiment the node comprises a network adapter and the network adapter comprises at least a portion of the memory access scheme.

In one embodiment the at least one control circuit is configured to transfer the data to the node based on a request for the memory access scheme.

A method comprising, receiving, at a first node, data, storing, at the first node, in a cache, at least a portion of the data, sending, from the first node, to a second node, location information for the at least a portion of the data and transferring, based on the location information, using a memory access scheme, the at least a portion of the data from the cache to the second node.

In one embodiment the sending the location information is performed using the memory access scheme.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
Fig. 1 illustrates an embodiment of a storage node and related methods in accordance with example embodiments of the disclosure.
Fig. 2 illustrates an example embodiment of a method and apparatus for accessing data at a storage node in accordance with example embodiments of the disclosure.
Fig. 3 illustrates an embodiment of a scheme for accessing data at a storage node using location information and/or a memory access scheme in accordance with example embodiments of the disclosure.
Fig. 4 illustrates an embodiment of a scheme for accessing data at a storage node using a mirror data structure in accordance with example embodiments of the disclosure.
Fig. 5 illustrates an example embodiment of a storage node and methods for using location information and/or a memory access scheme in accordance with example embodiments of the disclosure.
Fig. 6 illustrates an example embodiment of a method and apparatus for accessing data at a storage node using location information and/or a memory access scheme in accordance with example embodiments of the disclosure.
Fig. 7 illustrates an embodiment of a storage device in accordance with example embodiments of the disclosure.
Fig. 8 illustrates an example embodiment of a node apparatus in accordance with example embodiments of the disclosure.
Fig. 9 illustrates an example embodiment of a storage device in accordance with example embodiments of the disclosure.
Fig. 10 illustrates an embodiment of a method for accessing data at a storage node in accordance with example embodiments of the disclosure.

### DETAILED DESCRIPTION

A storage node may include one or more storage devices configured to store data. The storage node may also include one or more processors (e.g., a central processing unit (CPU)) that may implement an input and/or output (I/O or IO) stack to process requests to access the storage devices. The storage node may further include one or more types of caches that may improve access latency by storing, in a relatively faster type of memory, a copy of data stored in the storage devices. A read request received at the storage node may progress through the IO stack for further processing by the CPU which may retrieve the requested data from a cache (e.g., a cache hit) or from a storage device (e.g., a cache miss). The CPU may send a response to the request and/or the retrieved data back through the IO stack.

Processing a request with an IO stack, however, may result in a relatively high latency, for example, because the request may progress through one or more successive layers of the IO stack. The latency may be especially detrimental, for example, for requests to access relatively small data payloads.

A storage node in accordance with example embodiments of the disclosure may provide location information to enable a user to determine one or more locations (e.g., one or more cache locations) at which data may be stored at the storage node. Using the location information, the user may access the data in a manner that may, depending on the implementation details, reduce latency, improve bandwidth, and/or the like. For example, the user may access the data from a cache using a memory access scheme such as a remote direct memory access (RDMA) protocol which, depending on the implementation details, may bypass some or all of an IO stack.

A storage node may provide location information using various techniques in accordance with example embodiments of the disclosure. For example, in some embodiments, a storage node may use a data structure such as a hash table to track one or more cache locations at which data may be stored. The storage node may enable a user to access the data structure, for example, using a memory access scheme such as RDMA. Additionally, or alternatively, the storage node may transfer to a user, and/or maintain at the user, at least a portion of the data structure. This may enable the user to determine location information without accessing the data structure at the storage node which, depending on the implementation details, may further reduce latency, increase bandwidth, and/or the like.

In some embodiments, a storage node may use a first storage device as a cache for another storage device. For example, a storage node may use a solid state drive (SSD) as a cache (e.g., a flash cache) for a hard disk drive (HDD). In such an embodiment, the storage node may enable a user to access data located at the cache storage device using a protocol such as Nonvolatile Memory Express (NVMe) over Fabrics (NVMe-oF) which may use, for example, RDMA as an underlying transport scheme.

This disclosure encompasses numerous principles relating to accessing data at a storage node. The principles disclosed herein may have independent utility and may be embodied individually, and not every embodiment may utilize every principle. Moreover, the principles may also be embodied in various combinations, some of which may amplify some benefits of the individual principles in a synergistic manner.

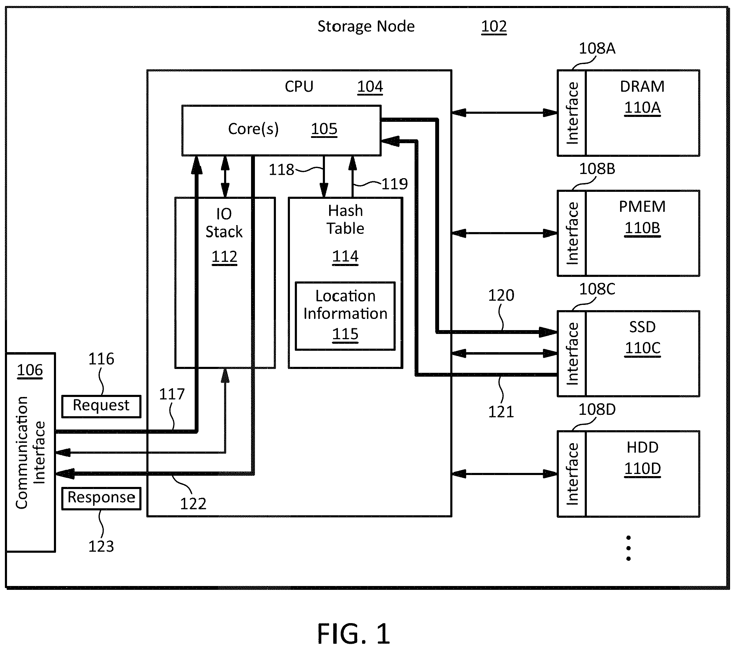

Fig. 1 illustrates an embodiment of a storage node and related methods in accordance with example embodiments of the disclosure. The storage node 102 illustrated in Fig. 1 may include a CPU 104, a communication interface 106, and one or more interfaces 108A, 108B, 108C, 108D, ... configured to communicate with one or more memory media 110A, 110B, 110C, 110D, ..., respectively. (The one or more interfaces 108A, 108B, 108C, 108D, ... may be referred to collectively and/or individually as 108, and the one or more memory media 110A, 110B, 110C, 110D, ... may be referred to collectively and/or individually as 110.)

The memory media 110 are not limited to any specific types of memory media. For example, one or more of the memory media 110 may be implemented with volatile memory media such as static random access memory (SRAM), dynamic random access memory (DRAM), and/or the like, or any combination thereof. As another example, one or more of the memory media 110 may be implemented with nonvolatile memory media including solid state media, magnetic media, optical media, and/or the like, or any combination thereof. Examples of solid state media may include flash memory such as not-AND (NAND) flash memory, persistent memory (PMEM) such as cross-gridded nonvolatile memory, memory with bulk resistance change, phase change memory (PCM), and/or the like, or any combination thereof.

The memory media 110 are not limited to any specific physical configuration, form factors, and/or the like. For example, one or more of the memory media 110 may be configured as integrated circuits attached (e.g., with solder, sockets, and/or the like) to a circuit board. As another example, one or more of the memory media 110 may be configured as modules, adapter cards, and/or the like such as single inline memory modules (SIMMs) or dual inline memory modules (DIMMs) connected to a circuit board using a connector, Peripheral Component Interconnect Express (PCIe) add-in cards, and/or the like. As a further example, one or more of the memory media 110 may be configured as storage devices in any form factor such as 3.5 inch, 2.5 inch, 1.8 inch, M.2, Enterprise and Data Center SSD Form Factor (EDSFF), any of the SFF-TA-100X form factors (e.g., SFF-TA-1002), NF1, and/or the like, using any connector configuration such as Serial ATA (SATA), Small Computer System Interface (SCSI), Serial Attached SCSI (SAS), M.2, U.2, U.3 and/or the like.

The interfaces 108 are not limited to any specific types of interfaces and may be implemented based on the type of memory medium they may used with. For example, one or more of the interfaces 108 may be implemented with a double data rate (DDR) interface of any generation (e.g., DDR4, DDR5, etc.), Open Memory Interface (OMI), and/or the like. As another example, one or more of the interfaces 108 may be implemented with an interconnect interface and/or protocol such as PCIe, Nonvolatile Memory Express (NVMe), NVMe Key-Value (NVMe-KV), SATA, SAS, SCSI, Compute Express Link (CXL) and/or a one or more CXL protocols such as CXL.mem, CXL.cache, and/or CXL.IO, Gen-Z, Coherent Accelerator Processor Interface (CAPI), Cache Coherent Interconnect for Accelerators (CCIX), and/or the like. As a further example, one or more of the interfaces 108 may be implemented with a networking interface and/or protocol such as Ethernet, Transmission Control Protocol/Internet Protocol (TCP/IP), remote direct memory access (RDMA), RDMA over Converged Ethernet (ROCE), Fibre Channel, InfiniBand (IB), iWARP, NVMe-over-fabric (NVMe-oF), and/or the like, or any combination thereof.

Although the memory media 110 and interfaces 108 are not limited to any specific types, for purposes of illustration, the interfaces 108 and memory media 110 may be implemented with the following example memory media and/or interfaces as illustrated in Fig. 1. The memory media 110A may be implemented with DRAM (e.g., as DIMM modules), and the interface 108A may be implemented with a DDR interface. The memory media 110B may be implemented with PMEM (e.g., cross-gridded nonvolatile memory), and the interface 108B may be implemented with a DDR interface. The memory media 110C may be implemented with NAND flash memory configured as a storage device (e.g., an SSD), and the interface 108C may be implemented with an NVMe protocol using a PCIe interface. (Alternatively, the memory media 110C may be implemented with NAND flash memory configured as a storage device (e.g., an SSD), and the interface 108C may be implemented with an NVMe-oF protocol using RDMA as an underlying transport.) The memory media 110D may be implemented with magnetic media configured as a storage device (e.g., an HDD), and the interface 108D may be implemented with a SAS interface. Moreover, although one of each type of memory media 110 may be illustrated in Fig. 1, some embodiments may include multiple instances of each type of memory media 110 and/or interfaces 108, fewer memory media 110 and/or interfaces 108, and/or additional types of memory media 110 and/or interfaces 108.

The storage node 102 is not limited to any specific physical form. For example, the storage node 102 may be implemented entirely or partially with, and/or used in connection with, one or more personal computers, servers, server chassis, server racks, datarooms, datacenters, edge datacenters, mobile edge datacenters, and/or any combinations thereof.

The CPU 104 may be implemented with one or more processing circuits (e.g., to enable the CPU 104 to operate as one or more control circuits) with one or more cores 105 that may be based, for example, on one or more complex instruction set computer (CISC) processors such as x86 processors and/or reduced instruction set computer (RISC) processors such as ARM processors, graphics processing units (GPUs), neural processing units (NPUs), tensor processing units (TPUs) and/or the like, executing instructions stored in any type of memory, or any combination thereof. The CPU 104 may further include any type of circuitry to implement one or more functions, features, and/or the like, (e.g., to operate as one or more control circuits) including combinational logic, sequential logic, one or more timers, counters, registers, and/or state machines, one or more complex programmable logic devices (CPLDs), field programmable gate arrays (FPGAs), application specific integrated circuits (ASICs), and/or the like.

The communication interface 106 may be implemented with any type of interconnect interface including those mentioned above, network interface including those mentioned above, and/or the like, or any combination thereof. The CPU 104 may implement an IO stack 112, for example, as part of an operating system (e.g., Linux) kernel run by the CPU. The IO stack 112 may enable the CPU 104, and/or one or more applications, processes, services, and/or the like running on the CPU 104 to communicate through the communication interface 106. For example, in an embodiment in which the communication interface 106 may be implemented with an Ethernet interface, the IO stack 112 may implement one or more layers including a programming sockets layer, a TCP layer, an IP layer, a driver layer, and/or the like.

In some embodiments, the CPU may configure and/or operate a portion of one of the memory media 110 as a cache for a portion of another one of the memory media 110. For example, in some embodiments, one or more HDDs 110D may be configured and/or operated as a main storage media (which may also be referred to as primary or underlying storage media) for the storage node, and all or a portion of each of the DRAM 110A, PMEM 110B, and/or SSD 110C may be configured and/or operated as caches for all or a portion of the main storage media. For example, a flash-based SSD 110C may be operated as a flash cache for the HDD 110D.

In some embodiments, all or a portion of each of the DRAM 110A, PMEM 110B, and/or SSD 110C may be configured and/or operated to provide a variety of different types of cache for the main storage media. Moreover, in some embodiments, one type of memory media 110 may include an internal cache that may operate as a cache within a cache. For example, an SSD 110C may include a NAND flash main storage media and a DRAM cache that may operate as a cache for the NAND flash main storage media. In some embodiments, one or more of the memory media 110 may be configured and/or operated in a hierarchical manner. For example, an SSD 110C may be configured and/or operated as a relatively larger but slower second level cache for the HDD 110D, and the PMEM 110B may be configured and/or operated as a relatively smaller but faster first level cache for the SSD 110C.

The CPU 104 may also implement a data structure such as a hash table 114 internally within the storage node 102 to enable the CPU 104 to track the location of data in the various memory media 110 throughout the storage node 102. For example, in an embodiment in which the HDD 110D may be configured and/or operated as a main storage media, the storage node may receive a request to read data from the HDD 110D. The request may specify the data in the form of a logical block address (LBA), a range of LBAs, a data object, a key for a key-value pair, and/or the like. The CPU 104 may look in the hash table 114 for an entry for the requested data (e.g., LBA(s), object, key-value pair, and/or the like). If the hash table includes an entry for the requested data, this may indicate that a copy of the requested data is stored in a cache such as in DRAM 110A, PMEM 110B, and/or SSD 110C. The CPU may use the hash table entry to retrieve the requested data from the location with the lowest latency (e.g., from the DRAM 110A if located in the DRAM 110A, from the PMEM 110B if not located in the DRAM 110A, or from the SSD 110C if not located in the PMEM 110B).

If the hash table 114 does not include an entry for the requested data, this may indicate that a copy of the requested data is not stored in any of the memory media 110 configured as a cache (e.g., the DRAM 110A, the PMEM 110B, or the SSD 110C), and thus, the CPU 104 may retrieve the requested data from the main storage media in the HDD 110D.

The form of an entry in the hash table 114 may depend on the type of memory media 110 it may reference. For example, an entry in the hash table 114 for data cached in for the DRAM 110A or the PMEM 110B may be in the form of a pointer to a memory address, and thus, the CPU 104 may access the requested data using load and/or store operations in a memory space to which the DRAM 110Aor the PMEM 110B may be mapped. As another example, an entry in the hash table 114 for data cached in for the SSD 110C may be in the form of an LBA within the SSD 110C, and thus, the CPU 104 may access the requested data, for example, by sending an NVMe command for a read operation to the SSD 110C. Therefore, in some embodiments, the hash table 114 may be implemented with an LBA as an input and a memory pointer or LBA for a specific memory media 110 as an output. Alternatively, or additionally, the hash table 114 may be implemented with any of an LBA, object identifier, key, and/or the like as in input and a memory pointer, LBA, object identifier, key, and/or the like for a specific memory media 110 as an output.

Although the hash table 114 may be illustrated conceptually as part of the CPU 104, the hash table 114 may be located anywhere including internal memory (e.g., cache memory) within the CPU 104 and/or any of the memory media 110 such as the DRAM 110A.

An example embodiment of a process for servicing a request to access (e.g., read) data stored at the storage node 102 may proceed as follows. The storage node 102 may receive a read request 116 through the communication interface 106 from a user such as another node, a client device, a server, a personal computer, a tablet computer, a smartphone, and/or the like. The request 116 may be processed by the IO stack 112 as shown by arrow 117. A CPU core 105 may further process the request 116 by performing a lookup 118 using the hash table 114 based on an LBA provided with the request 116. In the example illustrated in Fig. 1, the hash table lookup may return metadata 119 indicating that the requested data is located at an LBA within the SSD 110C. The CPU core 105 may access the requested data using the LBA within the SSD 110C as shown by arrow 120. The CPU core 105 may access the SSD 110C, for example, using an NVMe command if the interface 108C is implemented with PCIe. Alternatively, or additionally, the CPU core 105 may access the SSD 110C using an NVMe-oF command if the interface 108C is implemented with a network such as Ethernet, InfiniBand, and/or the like.

The CPU core 105 may read the requested data from the SSD 110C as shown by arrow 121. The CPU core 105 may send a response 123 that may include, for example, the requested data. The response 123 may be processed by the IO stack 112 and sent to the user through the communication interface 106 as shown by arrow 122.

Thus, the data requested by request 116 may travel through a data path that may include arrows 117, 120, 121, and/or 122. Moreover, the data path may progress through the IO stack twice and may also include the CPU 104 (e.g., one or more CPU cores 105). Depending on the implementation details, this relatively long data path may result in a relatively long latency and/or a relatively low bandwidth which may be especially detrimental, for example, when accessing relatively small data payloads.

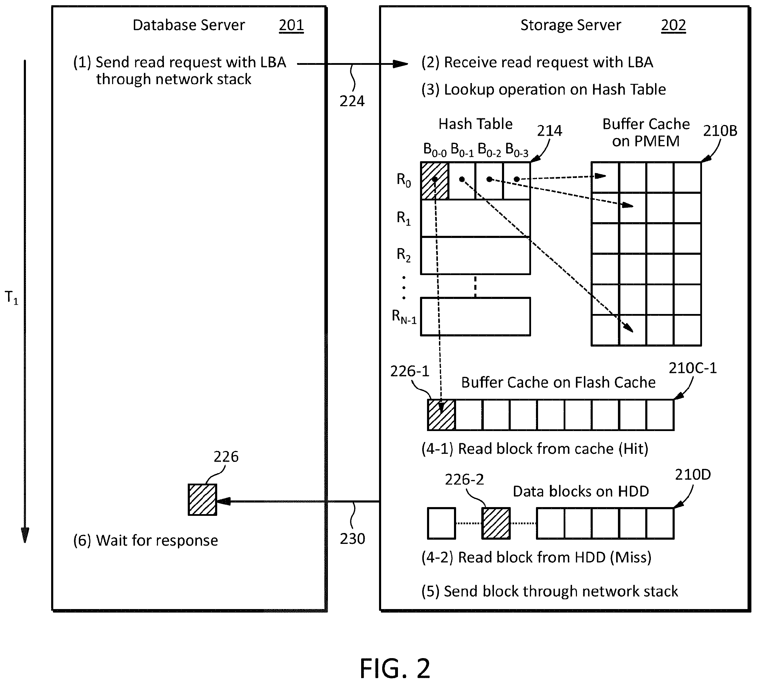

Fig. 2 illustrates an example embodiment of a method and apparatus for accessing data at a storage node in accordance with example embodiments of the disclosure. The embodiment illustrated in Fig. 2 may be implemented, for example, using an embodiment of a storage node similar to that illustrated in Fig. 1 in which similar elements may be indicated by reference numbers ending in, and/or containing, the same digits, letters, and/or the like.

Referring to Fig. 2, the storage node may be implemented with a storage server 202 that may include HDD storage 210D, PMEM 210B, and buffer cache 210C-1. The buffer cache 210C-1 may be implemented, for example, using volatile memory such as DRAM that may be configured as a cache within an SSD such as the SSD 110C illustrated in Fig. 1. Alternatively, or additionally, the buffer cache 210C-1 may be implemented with flash memory (e.g., as a flash cache) within an SSD such as the SSD 110C illustrated in Fig. 1.

The storage server 202 may further include a hash table 214 configured to track the location of data stored in the PMEM 210B and/or the buffer cache 21 0C-1, either or both of which may be configured to cache data stored in the HDD storage 210D. The HDD storage 210D may be configured, for example, as main storage media for the storage server 202.

The embodiment illustrated in Fig. 2 may also include another node which, in this example, may be implemented with a database server 201. In other embodiments, however, the other node may be implemented as any type of user such as another storage node, a client device, a server, a personal computer, a tablet computer, a smartphone, and/or the like. The database server 201 or other node may communicate with the storage server 202 using any type of communication interface including any of the interconnect and/or network interfaces, protocols, and/or the like mentioned above.

At operation (1), the database server 201 may send a request to read data to the storage server 202 as shown by arrow 224. The request may specify the requested data, for example, using an LBA. The database server 201 may send the request, for example, through a network channel that may be accessed using a network socket. At operation (2), the storage server 202 may receive the request through the network channel, for example, using a network IO stack.

At operation (3), at CPU at the storage server 202 may use the LBA to perform a lookup operation on the hash table 214. The hash table 214 may be arranged in rows R₀, R1, ..., R_{N-1}, including hash buckets in which hash buckets in row Ro may be indicated as B₀₋₀, B₀₋₁, ... B₀__{M-1} (where M=4 in this example). In the example illustrated in Fig. 2, hash buckets B₀₋₁, B₀₋₂, and B₀₋₃ may include pointers to memory locations in PMEM 210B that may store copies of data stored in the HDD storage 210D. Hash bucket Bo_o may include an LBA for a data block within an SSD including the buffer cache 210C-1. In some embodiments, the LBA provided by the hash table 214 for the data block within an SSD including the buffer cache 210C-1 may be a translation or mapping from the LBA provided with the request to an internal LBA within the SSD (e.g., an LBA in a range of 0 to the capacity of the SSD). In the example illustrated in Fig. 2 the LBA sent by the database server 201 may correspond to bucket B₀₋₀ as indicated by diagonal shading.

If the hash table lookup operation determines that the requested data is stored in the buffer cache 210C-1 (e.g., a cache hit), a CPU at the storage server 202 may perform operation (4-1) which may read the requested block of data 226-1 indicated by diagonal shading at the LBA determined by the lookup operation. If, however, the hash table lookup operation determines that the requested data is not stored in the PMEM 210B or the buffer cache 210C-1 (e.g., a cache miss), a CPU at the storage server 202 may perform operation (4-2) which may read the requested block of data 226-2 indicated by diagonal shading from the HDD storage 210D at the LBA provided with the request or at an LBA translated to an internal LBA within the HDD storage 210D (e.g., an LBA in a range of 0 to the capacity of the HDD 210D).

At operation (5), a CPU at the storage server 202 may send the requested data 226 (e.g., data 226-1 from the buffer cache 210C-1 or data 226-2 from the HDD storage 210D) to the database server 201 as shown by arrow 230 through the network channel, for example, using the network IO stack again. The database server 201 may wait for a response with the requested data to arrive through the network channel, for example, at the completion of a network socket read operation (6).

The latency from sending the request at operation (1) to receiving the requested data at the completion of operation (6) may be indicated as time T₁, the duration of which may depend, for example, on various factors such as a latency to transmit the request, processing time as the request progressed up through a network IO stack and the response progresses down through the network IO stack, processing time for CPU at the storage server 202 to perform a hash table lookup operation, one or more latencies to read data from one or more caches (e.g., the PMEM 210B or the buffer cache 210C-1), one or more latencies to read data from the HDD storage 210D, and/or the like. Depending on the implementation details, the latency T₁ may be relatively long which may be especially detrimental, for example, when accessing relatively small data payloads.

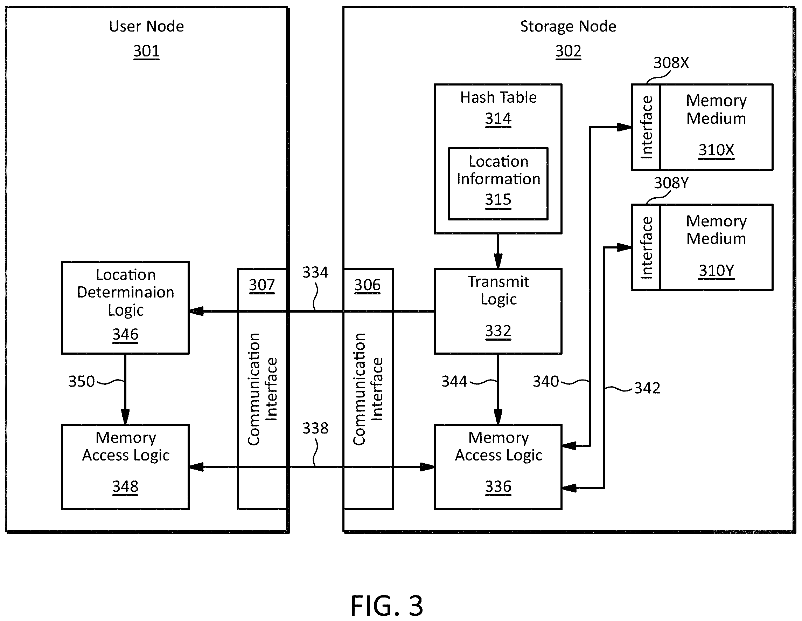

Fig. 3 illustrates an embodiment of a scheme for accessing data at a storage node using location information and/or a memory access scheme in accordance with example embodiments of the disclosure. The embodiment illustrated in Fig. 3 may include one or more elements similar to the embodiments illustrated in Fig. 1 and Fig. 2 in which similar elements may be indicated by reference numbers ending in, and/or containing, the same digits, letters, and/or the like.

The embodiment illustrated in Fig. 3 may include a storage node 302 and a user node 301. The storage node 302 and user node 301 may communicate using communication interfaces 306 and 307, respectively, which may implement any type of communication interface including any of the interconnect and/or network interfaces, protocols, and/or the like mentioned above.

The storage node 302 may include a first interface 308X configured to enable the storage node 302 to communicate with a first type of memory medium 310X and a second interface 308Y configured to enable the storage node 302 to communicate with a second type of memory medium 310Y.

In some embodiments, the storage node 302 may configure and/or operate at least a portion of one of the memory media 310X or 310Y as a cache for at least a portion of the other memory medium. For example, in some embodiments, the second memory medium 310Y may be implemented with an HDD configured as main storage, and the first memory medium 310X may be implemented with a buffer cache such as an SSD flash cache and/or a DRAM cache within an SSD. At least a portion of the first memory medium 310X may be configured as a cache to store copies of data stored in the main storage 310Y.

The storage node 302 may include a data structure (e.g., a hash table, list, tree structure, and/or the like) 314 that may store location information 315 to track the location(s) of one or more copies of data stored in a cache portion of the first memory medium 310X. For example, the location information 315 may indicate a location within the first memory medium that may store a cache copy of data stored in the main storage 310Y. The data structure 314 may be located anywhere, for example, in internal memory (e.g., cache memory) within a CPU and/or any of the memory media 310 such as the first memory media 31 0X.

The storage node 302 may also include transmit logic 332 that may transmit, from the storage node 302 to the user node 301 as shown by arrow 334, location information 315 for data stored at the storage node 302. The transmit logic 332 may transmit the location information 315 using any communication scheme such as a network transfer using a network IO stack, a memory access scheme (e.g., RDMA) as shown by arrow 344, and/or the like.

The location information 315 may enable the user node 301 to determine one or more locations (e.g., one or more cache locations) at which data may be stored at the storage node 302. Using the location information 315, the user node 301 may access the data in a manner that may, depending on the implementation details, reduce latency, improve bandwidth, and/or the like. For example, the user node 315 may access the data from a cache (e.g., memory medium 310X) using a memory access scheme such as RDMA which, depending on the implementation details, may bypass some or all of an IO stack.

The storage node 302 may also include memory access logic 336 that may enable the user node 301 to access data at the storage node 302 (e.g., data in a cache such as a cache portion of memory medium 310X) as shown by arrow 338. In some embodiments, the memory access logic 336 may enable the user node 301 to access data at the storage node 302 in a relatively direct manner. For example, memory access logic 336 may include hardware (e.g., a memory access controller) to which a processor such as a CPU or CPU core at the storage node 302 may offload data transfer operations. Depending on the implementation details, this may enable the processor to perform one or more other operations in parallel (e.g., overlapping) with a data transfer performed by the memory access logic 336.

As another example, memory access logic 336 may include hardware that may provide a data path (e.g., a pass-through data path) as shown by arrows 338, 340, and/or 342 that may bypass some or all of a processor such as a CPU or CPU core and/or an IO stack (e.g., a network IO stack). In some embodiments, memory access logic 336 may also be used by transmit logic 332 to send location information 315 to the user node 301 as shown by arrow 344.

As a further example, the memory access logic 336 may be implemented at least partially with software (e.g., at a CPU or CPU core) that may enable a processor to bypass at least a portion of an IO stack (e.g., a network IO stack) or one or more other software components such as a service, a process, a kernel, a driver, and/or the like, that may increase latency and/or reduce the bandwidth of data transfers.

An example of memory access logic 336 may include a direct memory access (DMA) controller, for example, with a bridge to a network and/or interconnect interface. Another example of memory access logic 336 may include a remote memory access controller (e.g., an RDMA controller) that may use an underlying transport scheme such as Ethernet, RDMA over converged Ethernet (RoCE), InfiniBand, iWARP, Fibre Channel, and/or the like. In some embodiments, memory access logic 336 may implement a protocol such as NVMe-oF which may use an underlying transport such as RoCE, InfiniBand, and/or the like.

The user node 301 may include location determination logic 346 that may enable the user node 301 to determine, based on location information 315, one or more locations from which to access data within the storage node 302. For example, the user node 301 may request location information 315 for data that user node 301 previously stored at the storage node 302. The storage node 302 may respond by sending location information 315 that the location determination logic 346 may determine indicates that a copy of the requested data may be located in a cache portion of the first memory medium 310X.

The user node 301 may also include memory access logic 348 that may enable the user node 301 to access data at the storage node 302 in a relatively direct manner. In some embodiments, memory access logic 348 may implement one or more protocols, interfaces, and/or the like that may work in coordination with the memory access logic 336 at the storage node 302. For example, memory access logic 348 at user node 301 and the memory access logic 336 at the storage node 302 may implement an RDMA scheme in which the user node 301 may operate as an initiator and the storage node 302 may operate as a target to transfer data from the storage node 302 to the user node 301.

Although the location determination logic 346 and the memory access logic 348 at user node 301 may have independent functionality, in some embodiments, the memory access logic 348 may be used to retrieve data from a location at the storage node 302 that may be determined by the location determination logic 346. For example, as described above, the location determination logic 346 may receive location information 315 that indicates that a copy of data stored at the storage node 302 may be located in a cache portion of the first memory medium 310X. The location may be indicated, for example, by a memory address, an LBA, a device identifier, and/or the like. The location determination logic 346 may send the location information 315, or a version that has been processed, interpreted, and/or the like, to the memory access logic 348 as shown by arrow 350. The memory access logic 348 may use the location information 315 to access (e.g., read) the data from the cache portion of the first memory medium 31 0X. For example, memory access logic 348 at the user node 301 (operating as an initiator) may initiate a data transfer with memory access logic 336 at the storage node 302 (operating as a target) using RDMA, NVMe-oF, and/or the like.

The memory access logic 348 at the user node 301 and the memory access logic 336 at the storage node 302 may be configured to initiate a transfer of data in various manners in accordance with example embodiments of the disclosure. For example, in some embodiments, the memory access logic 348 at the user node 301 may send a memory access request to the memory access logic 336 at the storage node 302 in the form of a command, command capsule, message, instruction, and/or any other type of indication that the user node 301 may be requesting to read data from the storage node 302.

In some embodiments in which the memory access logic 348 and 336 may implement an RDMA and/or NVMe-oF scheme, the memory access logic 348 at the user node 301 may be configured as an initiator, and the memory access logic 336 at the storage node 302 may be configured as a target. The initiator (which may also be referred to as a client) may issue a read request that may include a destination memory address in its local memory. The target (which may also be referred to as a server) may respond by fetching the requested data from one or more locations at the storage node 302 and writing the requested data (e.g., directly) into the initiator's memory at the destination memory address.

In some embodiments implemented with RDMA and/or NVMe-oF, the configuration of the memory access logic may be reversed such that the memory access logic 348 at the user node 301 may be configured as a target, and the memory access logic 336 at the storage node 302 may be configured as an initiator. In such an embodiment, the user node 301 may send a command, message, and/or any other indication to the storage node 302 to request that the memory access logic 336 initiate an RDMA and/or NVMe-oF transfer.

Depending on the implementation details, an embodiment of a scheme for accessing data as illustrated in Fig. 3 may reduce latency, increase bandwidth, and/or the like. For example, the data path (e.g., a pass-through data path) using the memory access logic 336 as shown by arrows 338 and 340 may bypass a CPU, a CPU core, an IO stack, one or more processes, services, kernels, drivers, and/or the like at the storage node 302. Depending on the implementation details, the memory access logic 348 at the user node 301 may similarly implement a data path (e.g., a pass-through data path) that may bypass a CPU, a CPU core, an IO stack, one or more processes, services, kernels, drivers, and/or the like at the user node 301.

As with the memory access logic 336 at the storage node 302, the memory access logic 348 at user node 301 may be implemented with hardware, software, or a combination thereof that may enable a processor such as a CPU or CPU core at the user node 301 to offload data transfer operations to the memory access logic 336 (e.g., to enable a processor at the user node 301 to perform one or more other operations in parallel (e.g., overlapping) with a data transfer performed by the memory access logic 348), provide a data path (e.g., a pass-through data path) that may bypass some or all of a processor such as a CPU or CPU core, a service, a process, a kernel, an IO stack (e.g., a network IO stack), and/or the like.

As with the storage node 302, the user node 301 is not limited to any specific physical form. For example, the user node 301 may be implemented entirely or partially with, and/or used in connection with, one or more personal computers, tablet computers, smart phones, servers, server chassis, server racks, datarooms, datacenters, edge datacenters, mobile edge datacenters, and/or any combinations thereof.

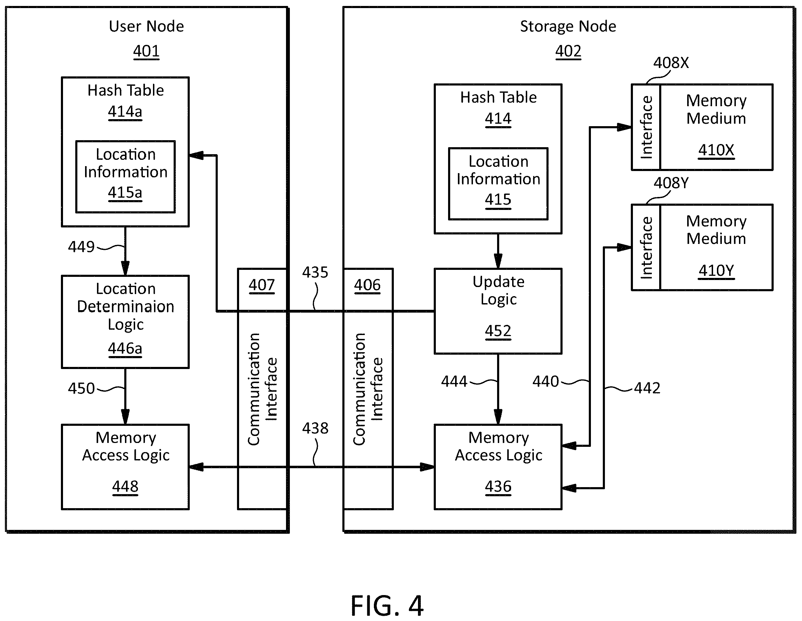

Fig. 4 illustrates an embodiment of a scheme for accessing data at a storage node using a mirror data structure in accordance with example embodiments of the disclosure. The embodiment illustrated in Fig. 4 may include one or more elements similar to the embodiments illustrated in Fig. 1, Fig. 2, and/or Fig. 3 in which similar elements may be indicated by reference numbers ending in, and/or containing, the same digits, letters, and/or the like.

In some aspects, the embodiment illustrated in Fig. 4 may be similar to the embodiment illustrated in Fig. 3. However, in the embodiment illustrated in Fig. 4, the storage node 402 may include update logic 452 that may maintain a copy of at least a portion of the data structure 414 at the user node 401. For example, the update logic 452 may initially send a copy of all or some of the data structure 414 including location information 415 to the user node 401 as shown by arrow 435 where it may be stored as location information 415a in a data structure (e.g., a mirror data structure) 414a, for example, as part of process for startup, reset, initialization, and/or the like.

As the storage node 402 adds, removes, overwrites, flushes, invalidates, and/or the like, cache entries in one or more caches, the storage node 402 may update entries in the data structure 414 to reflect the changes in the cache contents. The update logic 452 may update a corresponding entry in the mirror data structure 414a at the user node 401, for example, in response to the data structure 414 at the storage node 402 being updated. Thus, in some embodiments, the update logic 452 may initiate (e.g., cause) an update of one or more entries in the mirror data structure 414a.

The update logic 452 may update a corresponding entry in the mirror data structure 414a at any time, for example, at the same time the data structure 414 is updated, immediately or relatively soon after the data structure 414 is updated, at some later time, for example, as part of a background process, and/or at any other time.

Depending on the implementation details, maintaining a mirror data structure 414a at the user node 401 may reduce latency, increase bandwidth, and/or the like. For example, to request data from the storage node 402, the location detection logic 446a at the user node 401 may perform a lookup operation on the mirror data structure 414a to determine if location data 415 for the requested data is present in the mirror data structure 414a. If location data 415 for the requested data is present in the mirror data structure 414a, the user node 401 may use the location data 415 to read the data from the storage node 402 (e.g., using memory access logic 448 as shown by arrows 449 and 450) without first requesting location data 415 from the storage node 402. Thus, the total latency to read data from the storage node 402 may be reduced, for example, by the amount of time involved in requesting location data 415 from the storage node 402.

In some embodiments, the mirror data structure 414a may initially be empty, and entries may be added to, and/or updated at, the mirror data structure 414a on a demand basis (e.g., as the user node 401 sends access requests to the storage node 402). In such an embodiment, rather than updating (e.g., sending entry updates to) the mirror data structure 414a based on updates to the data structure 414 at the storage node 402, the update logic 452 may use a flag or other mechanism to inform the user node 401 to invalidate one or more entries in the mirror data structure 414a, for example, if an entry has been updated in the data structure 414 since the user node last accessed the data corresponding to the entry.

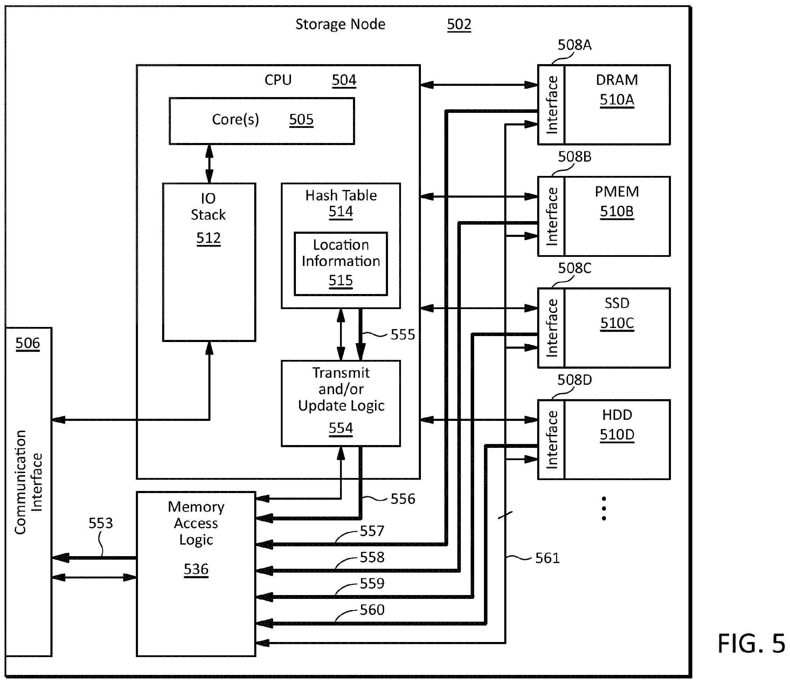

Fig. 5 illustrates an example embodiment of a storage node and methods for using location information and/or a memory access scheme in accordance with example embodiments of the disclosure. The storage node 502 illustrated in Fig. 5 may include one or more elements similar to the embodiments illustrated in Fig. 1, Fig. 2, Fig. 3, and/or Fig. 4 in which similar elements may be indicated by reference numbers ending in, and/or containing, the same digits, letters, and/or the like. The storage node 502 may be used, for example, to implement, or be implemented with, one of the storage nodes illustrated in Fig. 3 and/or Fig. 4.

In some aspects, the storage node 502 illustrated in Fig. 5 may be similar to the embodiment illustrated in Fig. 1. However, the embodiment illustrated in 5 may include transmit and/or update logic 554 that may perform one or more operations similar to the transmit logic 332 illustrated in Fig. 3 and/or the update logic 452 illustrated in Fig. 4. Additionally, or alternatively, the storage node 502 illustrated in Fig. 5 may include memory access logic 536 that may perform one or more operations similar to the memory access logic 336 and 436 illustrated in Fig. 3 and Fig. 4, respectively.

The memory access logic 536 may be implemented, for example, with NVMe-oF, RDMA, and/or the like, using an underlying network such as Ethernet, RoCE, InfiniBand, iWARP, and/or the like. The memory access logic 536 is not limited to any physical configuration. However, in some example embodiments, the memory access logic 536 may be integral with the communication interface 506. For example, the memory access logic 536 (e.g., NVMe-oF, RDMA, and/or the like) and communication interface 506 (e.g., RoCE, InfiniBand, iWARP, and/or the like) may be integrated within a network adapter (which may also be referred to as a network interface card (NIC) and/or network interface controller (also a NIC)). For purposes of illustration, multiple connections between the memory access logic 536 and one or more interfaces 508 may be shown as a single bus 561, but any number and/or types of connections may be used.

In some embodiments, the memory access logic 536 may implement one or more relatively direct data paths between the communication interface 506 and one or more of the interfaces 508, memory media 510, data structure 514 (which may be implemented, for example, with a hash table as illustrated in Fig. 5), transmit and/or update logic 554, and/or the like, as shown by arrows 553, 555, 556, 557, 558, 559, and/or 560. Depending on the implementation details, one or more of the data paths 553, 555, 556, 557, 558, 559, and/or 560 may operate as a pass-through path that may, for example, bypass some or all of a data path through one or more of the I/O stack 512, CPU 504, CPU core(s) 505, and/or the like.

The data paths 556, 557, 558, 559, and/or 560 are not limited to any specific operations. In one example embodiment, however, a data access operation may proceed as follows. A user such as user node 301 illustrated in Fig. 3 may read, from the storage node 502, location information 515 for a cache copy of data stored in HDD storage 510D. The user may read the location information 515, for example, using an RDMA access as shown by arrows 553, 555, 556, and/or 557 to access the transmit and/or update logic 554 and/or the hash table 514 (which may be stored, for example, at the CPU 504, the DRAM 510A, and/or the like). The user may select a portion (e.g., a hash bucket) of the hash table 514 to read based, for example, on an LBA of the data stored in HDD storage 510D.

The user may receive the location information 515, for example, in the form of a hash bucket that may include information to identify a device (e.g., one of memory media 510 if a cached copy of the requested data is stored at the memory media 510), a pointer to a memory address (e.g., if a cached copy of the requested data is stored at DRAM 510A and/or PMEM 510B), an LBA (e.g., an LBA that may be internal, translated, and/or mapped, to a device if a cached copy of the requested data is stored at the SSD 510C), and/or the like. The user may interpret the location information 515, for example, using location determination logic such as location determination logic 346 illustrated in Fig. 3).

Alternatively, or additionally, the user may obtain location information 515 for a cache copy of data stored in HDD storage 510D by performing a lookup on a data structure maintained at the user such as, for example, the data structure 415a illustrated in Fig. 4.

The user may use the location information 515 to access a cached copy of the requested data using the memory access logic 536. For example, if the location information 515 indicates that a cached copy of the requested data is stored in DRAM 510A and/or PMEM 510B, the user may initiate one or more RDMA reads of a cache portion of the DRAM 510A and/or PMEM 510B using the pass-through paths 557 and/or 558. As another example, if the location information 515 indicates that a cached copy of the requested data is stored in SSD 510C, the user may initiate one or more NVMe-oF reads of a cache portion of the SSD 510C using the pass-through path 559. Additionally, or alternatively, the storage node 502 illustrated in Fig. 5 may include a bridge such as an NVMe-oF to NVMe bridge that may enable a storage device such as SSD 510 that may be implemented with NVMe (e.g., using PCIe) to communicate using NVMe-oF through the memory access logic 536 using the pass-through path 559. One or more additional pass-through paths such as pass-through path 560 may be used to access one or more additional memory media such as HDD 510D.

Depending on the implementation details, the apparatus and/or methods illustrated in Fig. 5 may reduce latency, increase bandwidth, and/or the like. For example, compared to the request and/or data paths 117, 120, 121, and/or 122 illustrated in Fig. 1, one or more of the data paths 553, 555, 556, 557, 558, 559, and/or 560 illustrated in Fig. 5 may provide more direct access to location information, cached data, and/or the like, for example, by bypassing one or more of an I/O stack 512, CPU 504, CPU core(s) 505, and/or the like. For purposes of illustration, the data paths 553, 555, 556, 557, 558, 559, and/or 560 may be shown running from one or more of the memory media 510 to the communication interface 506, but the data paths may be used in the other direction, for example, to write data to one or more of the memory media 510.

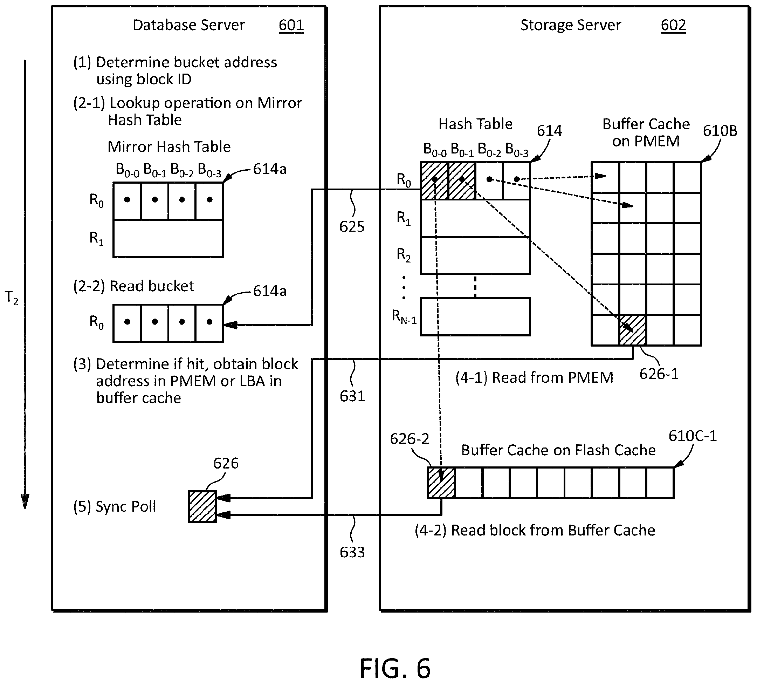

Fig. 6 illustrates an example embodiment of a method and apparatus for accessing data at a storage node using location information and/or a memory access scheme in accordance with example embodiments of the disclosure. The embodiment illustrated in Fig. 6 may be implemented, for example, using an embodiment of a storage node similar to that illustrated in Fig. 5 in which similar elements may be indicated by reference numbers ending in, and/or containing, the same digits, letters, and/or the like. The embodiment illustrated in Fig. 6 may also include one or more elements similar to elements illustrated in Fig 1, Fig. 2, Fig. 3, and/or Fig. 4 in which similar elements may be indicated by reference numbers ending in, and/or containing, the same digits, letters, and/or the like.

Referring to Fig. 6, a storage node may be implemented with a storage server 602 that may include PMEM 610B, and a buffer cache 610C-1. The buffer cache 610C-1 may be implemented, for example, using volatile memory such as DRAM that may be configured as a cache within an SSD such as the SSD 510C illustrated in Fig. 5. Alternatively, or additionally, the buffer cache 610C-1 may be implemented with flash memory (e.g., as a flash cache) within an SSD such as the SSD 510C illustrated in Fig. 5.

The storage server 602 may further include a hash table 614 configured to track the location of data stored in the PMEM 610B and/or the buffer cache 610C-1, either or both of which may be configured to cache data stored, for example, in HDD storage (not shown) at the storage server 602. The HDD storage may be configured, for example, as main storage media for the storage server 602.

The embodiment illustrated in Fig. 6 may also include another node which, in this example, may be implemented with a database server 601. In other embodiments, however, the other node may be implemented as any type of user such as another storage node, a client device, a server, a personal computer, a tablet computer, a smartphone, and/or the like. The database server 601 or other node may communicate with the storage server 602 using any type of communication interface including any of the interconnect and/or network interfaces, protocols, and/or the like mentioned above. For purposes of illustration, however, the database server 601 and storage server 602 may be assumed to communicate at least using one or more networks that may support a memory access scheme such as RDMA and/or NVMe-oF.

At operation (1), the database server 601 may determine a bucket address for the hash table 614 using a block identifier (block ID) (e.g., based on an LBA) of data to read from the storage server 602. If at least a portion of the hash table 614 is stored locally at the database server 601 as a mirror hash table 614a, the database server 601 may perform operation (2-1) in which the database server 601 may perform a lookup operation, using the block ID, on the mirror hash table 614a to determine if the portion of the mirror hash table 614a that is stored locally includes a hash bucket (e.g., an entry) for the data to be read from the storage server 602, and if so, to obtain the hash bucket.

If, however, a mirror hash table 614a is not stored locally at the database server 601, or a portion of a mirror hash table 614a that is stored locally does not include a hash bucket corresponding to the block ID, the database server 601 may perform operation (2-2) in which the database server 601 may read, using the block ID, a hash bucket from the hash table 614 as shown by arrow 625. The storage server 602 may read the hash bucket, for example, using an RDMA access of the hash table 614 which may be stored in a DRAM, PMEM, and/or the like, at the storage server 602.

If the database server 601 is unable to obtain a hash bucket (e.g., from a mirror hash table 614a at the database server 601 and/or from the hash table 614 at the storage server 602) corresponding to the block ID, the database server 601 may determine that a cache copy of the data corresponding to the block ID is not stored in a cache at the storage server 602. Therefore, the database server 601 may obtain the data from HDD storage 610D at the storage server 602 using a request (e.g., sent through a network IO stack) as described above with respect to Fig. 1.

If, however, the database server 601 is able to obtain a hash bucket (e.g., from a mirror hash table 614a at the database server 601 and/or from the hash table 614 at the storage server 602), the database server 601 may perform operation (3) in which may process location information in the hash bucket (e.g., by parsing, interpreting, looking up, and/or the like) the location information to determine a location of a cache copy of the data at the storage server 602. For example, the location may include a memory address (e.g., a pointer to a memory location address) if the cache copy is stored at a DRAM, the PMEM 610B, and/or the like at the storage server 602 (e.g., in bucket B₀₋₁). As another example, the location may include an LBA (or range of LBAs) if the cache copy of data is stored at the buffer cache 610C-1 (e.g., in bucket B₀₋₀).

The database server 601 may use the location of the cache copy of data to read the data from the storage server 602. For example, if a cache copy of the data corresponding to the block ID is stored at the PMEM 610B, the database server 601 may read, at operation (4-1), the data 626-1 from the PMEM 610B using, for example, an RDMA read as shown by arrow 631. If, however, a cache copy of the data corresponding to the block ID is stored at the buffer cache 610C-1, the database server 601 may read, at operation (4-2), the data 626-2 from the PMEM 610B using, for example, an NVMe-oF read as shown by arrow 633.

At operation (5), the database server 601 may perform a synchronization polling operation (sync poll) in which it may poll (e.g., continuously, periodically, and/or the like) a memory access scheme to determine if the data read operation is completed, for example, by writing the data 626 to memory at the database server 601. In some embodiments, a synchronization polling operation may be used, for example, because a relatively direct data read such as an RDMA or NVMe-oF read may not involve a request-response pair, and therefore, the database server 601 may not receive a response (e.g., from an IO stack) to indicate that the data transfer has been completed.

The latency from determining the bucket address at operation (1) to receiving the data at the completion of operation (5) may be indicated as time T₂. Depending on the implementation details, the embodiment illustrated in Fig. 6 may reduce latency, increase bandwidth, and/or the like, for example, by bypassing one or more of an I/O stack, CPU, CPU core, and/or the like, at the database server 601 and/or storage server 602. The embodiment illustrated in Fig. 6 is not limited to any specific implementation details. However, for purposes of comparison, in some implementations, the latency T₁ illustrated in Fig. 2 may typically be about 200µs, whereas the latency T₂ illustrated in Fig. 6 may be a few microseconds for an RDMA read from PMEM 610B and/or about 100µs for an NVMe-oF read from buffer cache 610C-1.

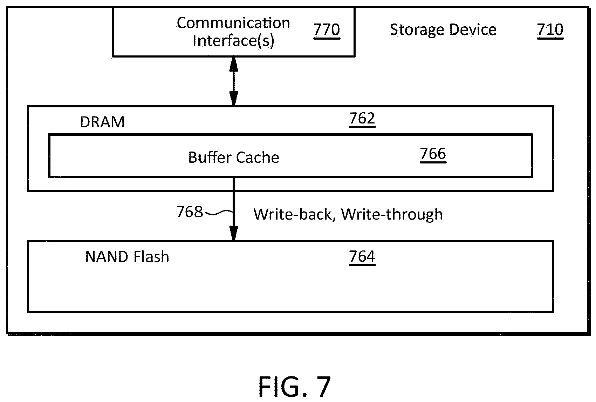

Fig. 7 illustrates an embodiment of a storage device in accordance with example embodiments of the disclosure. The storage device 710 illustrated in Fig. 7 may be used to implement one or more of the memory media disclosed herein. For example, the storage device 710 may be used to implement any of the SSDs 110C, 210C, 510C, and/or 610C illustrated in Fig. 1, Fig. 2, Fig. 5, and/or Fig. 6.

Referring to Fig. 7, the storage device 710 may include a first memory media 762 and a second memory media 764. Although the memory media 762 and 764 are not limited to any specific type of media, in some example embodiments, the first memory media 762 may be implemented with a volatile and/or byte-addressable type of memory media such as DRAM and/or PMEM, whereas the second memory media 764 may be implemented with a nonvolatile type of memory media that may be addressable in pages, blocks, and/or the like, such as NAND flash memory. For example, in an embodiment in which the storage device 710 is implemented with an SSD, the first memory media 762 may be implemented with DRAM, and the second memory media 764 may be implemented with NAND flash memory as illustrated in Fig. 7.

The storage device 710 may include a buffer cache 766 that may be used to store one or more cache copies of data, or portions of data, stored in the second memory media 764, for example, to provide access to the data with lower latency than may be involved with reading the data from the second memory media 764. The buffer cache 766 may be implemented with a write-back mechanism, a write-through mechanism, and/or any other type of cache mechanism as illustrated by arrow 768.

The storage device 710 may include one or more communication interfaces 770 that may be implemented, for example, with any type of interconnect and/or network interfaces, protocols, and/or the like described herein or a combination thereof. For example, in some embodiments, a communication interface 770 may be implemented with one or more network transport schemes such as Ethernet, RoCE, InfiniBand, and/or the like that may support one or more protocols such as RDMA, NVMe-oF, and/or the like. In some embodiments, a communication interface 770 may be implemented with an interconnect such as PCIe that may support an NVMe protocol. In such an embodiment, an NVMe to NVMe-oF bridge may be included (e.g., in the one or more communication interfaces 770 and/or at a storage node at which the storage device 710 may be located) to enable the storage device 710 to transfer data using a memory access scheme such as the memory access logic 336, 436, and/or 536 described above.

In an SSD embodiment in which the first memory media 762 may be implemented with DRAM, and the second memory media 764 may be implemented with NAND flash memory, if a memory space (e.g., address space) of the NAND 764 is larger than the DRAM cache 766, a NAND random read may provide a relatively slow (e.g., the slowest) access path which may be the sum of a general access latency of the SSD 710 (e.g., protocol controllers, flash translation layer (FTL) and/or the like) plus the NAND latency. In such an embodiment, an average latency may be given by the DRAM latency*hit ratio + NAND latency*(1-hit ratio). If requested data is located in flash cache, a user node may read a data block from the flash cache using, for example, NVMe-oF.

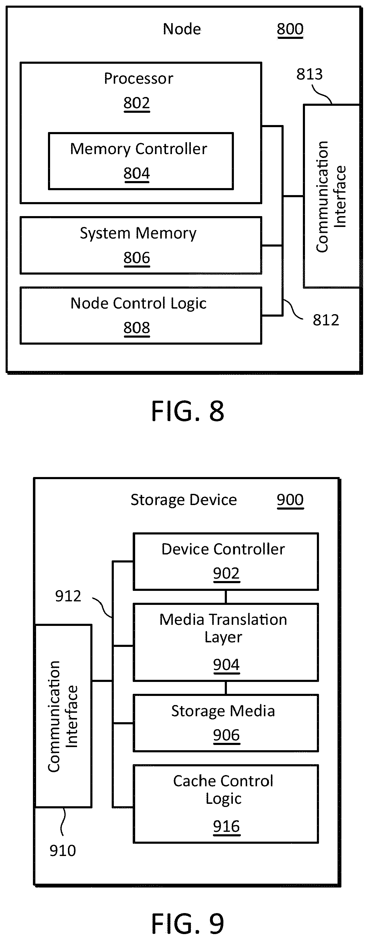

Fig. 8 illustrates an example embodiment of a node apparatus that may be used to implement any of the node functionality disclosed herein in accordance with example embodiments of the disclosure. The node apparatus 800 illustrated in Fig. 8 may include a processor 802, which may include a memory controller 804, a system memory 806, node control logic 808, and/or a communication interface 813. Any or all of the components illustrated in Fig. 8 may communicate through one or more system buses 812. In some embodiments, one or more of the components illustrated in Fig. 8 may be implemented using other components. For example, in some embodiments, the node control logic 808 may be implemented by the processor 802 executing instructions stored in the system memory 806 or other memory.

The node control logic 808 may be used to implement any of the node functionality disclosed herein, for example, one or more of the location determination logic 346 and/or 446, memory access logic 336, 436, and/or 536, transmit and/or update logic 332, 452, and/or 554, and/or the like, described above with respect to Fig. 3, Fig. 4, Fig. 5, and/or Fig. 6.

Fig. 9 illustrates an example embodiment of a storage device that may be used to implement any of the storage device functionality disclosed herein in accordance with example embodiments of the disclosure. The storage device 900 may include a device controller 902, a media translation layer 904 (e.g., an FTL), a storage media 906, cache control logic 916, and a communication interface 910. The components illustrated in Fig. 9 may communicate through one or more device buses 912. In some embodiments that may use flash memory for some or all of the storage media 906, the media translation layer 904 may be implemented partially or entirely as a flash translation layer (FTL).

The cache control logic 916 may be used to implement any of the storage device cache functionality disclosed herein, for example, one or more of the buffer cache on flash cache 610C-1 and/or buffer cache 766 described above with respect to Fig. 6 and/or Fig. 7.

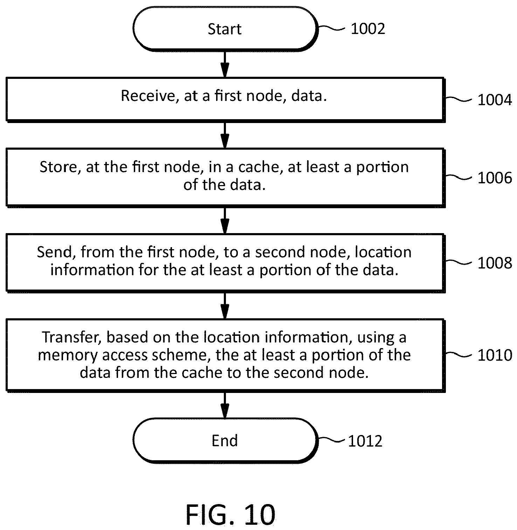

Fig. 10 illustrates an embodiment of a method for accessing data from a storage node in accordance with example embodiments of the disclosure. The method may begin at operation 1002. At operation 1004, the method may receive, at a first node, data, for example, data to be stored in a hard disk drive such as HDD 510D illustrated in Fig. 5. At operation 1006, the method may store, at the first node, in a cache, at least a portion of the data. For example, at least a portion of the data may be stored in a cache located at the DRAM 510A, PMEM 510B, and/or SSD (or DRAM cache therein) illustrated in Fig. 5. At operation 1008, the method may send, from the first node, to a second node, location information for the at least a portion of the data. For example, the transmit and/or update logic 554 illustrated in Fig. 5 may send at least a portion of location information 515 to another node using communication interface 506. At operation 1010, the method may transfer, based on the location information, using a memory access scheme, the at least a portion of the data from the cache to the second node. For example, the memory access logic 536 illustrated in Fig. 5 may transfer the data using RDMA, NVMe-oF, and/or the like. The method may end at operation 1012.

The embodiment illustrated in Fig. 10, as well as all of the other embodiments described herein, are example operations and/or components. In some embodiments, some operations and/or components may be omitted and/or other operations and/or components may be included. Moreover, in some embodiments, the temporal and/or spatial order of the operations and/or components may be varied. Although some components and/or operations may be illustrated as individual components, in some embodiments, some components and/or operations shown separately may be integrated into single components and/or operations, and/or some components and/or operations shown as single components and/or operations may be implemented with multiple components and/or operations.

Any of the storage devices disclosed herein including devices 110, 210, 310, 410, 510, 610, and/or 710 may be implemented in any form factor such as 3.5 inch, 2.5 inch, 1.8 inch, M.2, Enterprise and Data Center Standard Form Factor (EDSFF), NF1, and/or the like, using any connector configuration such as Serial ATA (SATA), Small Computer System Interface (SCSI), Serial Attached SCSI (SAS), U.2, and/or the like. Any of the storage devices disclosed herein may be implemented entirely or partially with, and/or used in connection with, a server chassis, server rack, dataroom, datacenter, edge datacenter, mobile edge datacenter, and/or any combinations thereof.

Any of the functionality described herein, including any of the functionality that may be implemented with a node, a storage device, and/or the like, or a combination thereof, including, for example, location determination logic 346 and/or 446, memory access logic 336, 436, and/or 536, transmit and/or update logic 332, 452, and/or 554, and/or the like, described above with respect to Fig. 3, Fig. 4, Fig. 5, and/or Fig. 6, as well as any of the functionality described with respect to the embodiments illustrated in Fig 8 and/or Fig. 9 may be implemented with hardware, software, firmware, or any combination thereof including, for example, hardware and/or software combinational logic, sequential logic, timers, counters, registers, state machines, volatile memories such DRAM and/or SRAM, nonvolatile memory including flash memory, persistent memory such as cross-gridded nonvolatile memory, memory with bulk resistance change, PCM, and/or the like and/or any combination thereof, CPLDs, FPGAs, ASICs, CPUs including CISC processors and/or RISC processors, GPUs, NPUs, TPUs, data processing units (DPUs), and/or the like, executing instructions stored in any type of memory. In some embodiments, one or more components may be implemented as a system-on-chip (SOC).

Although the embodiments disclosed herein are not limited to any specific applications, one or more embodiments of schemes for accessing data at a storage node may be beneficial, for example, for databases which may access data from a hard disk drive that may be configured with one or more (e.g., multiple hierarchical) caches during a data retrieval process. Such an embodiment may include a database server and a storage server. Some embodiments may include one or more (e.g., many) servers in one rack (e.g., 10 servers in each rack). One or more database servers may process user queries, and/or may analyze requests and/or processes. For a user to access data, the user may access a storage server first. The data can be stored, for example, on flash cache, hard disk, and/or the like, and a storage server may provide the data as needed. Different components in a storage server may provide data storage with different types of latencies.

Some embodiments may be used to implement data prefetching, for example, low-latency data prefetching for database operations using memory access schemes such as RDMA, NVMe-oF, and/or the like.

In some embodiments, a system may use RDMA (e.g., with RoCE transport) to access data to reduce latency with PMEM. Some embodiments may include a data server and a storage server. Such a system may maintain various types of memory (e.g., PMEM, flash cache, and/or the like). For example, a predetermined size of memory (e.g., an 8k block) may be used to store data in DRAM, flash, and/or PMEM in the system. If stored in DRAM, data may be read directly into local memory in a database server using, for example, RDMA. Some embodiments may implement two RDMA operations to access data. For example, the first operation may read a hash table on a storage server to calculate which bucket of DRAM to use. The system may thereby load data to a database server which may check a bucket to determine if a requested data block is cached or not and determine the type of memory on which the data block is stored (e.g., PMEM, flash, cache, and/or the like). Thus, the first operation may obtain metadata information (e.g., an address of a data block), and the second operation may use RDMA to read the actual data from DRAM, persistent memory, and/or the like.

Some embodiments may implement one or more techniques to reduce or minimize latency to access memory and/or storage, for example, at a storage node. For example, some embodiments may include one RDMA operation and one NVMeOF operation to access data. The first operation may include reading a hash bucket from a hash table on a storage server using an RDMA read operation to calculate which data block to read. The system may thereby load the hash bucket to a database server which may check the bucket contents to see if the data block is cached or not and determine the type of memory where the data block is stored (e.g., persistent memory, flash, DRAM, and/or the like). Thus, the first operation may obtain metadata information (e.g., address of data block). If the data is stored in an NVMe storage device, the second operation can include NVMe-oF to read the actual data block from a flash cache.

Some embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

Since the inventive principles of this patent disclosure may be modified in arrangement and detail without departing from the inventive concepts, such changes and modifications are considered to fall within the scope of the following claims.

## Claims

1. An apparatus comprising:
a storage node comprising:
a first interface to communicate with a first memory medium;
a second interface to communicate with a second memory medium; and
at least one control circuit configured to:
transmit, from the storage node, location information for data stored in the first memory medium; and
transfer, from the storage node, using a memory access scheme, the data.

2. The apparatus of claim 1, wherein the at least one control circuit is configured to operate at least a portion of the first memory medium as a cache for at least a portion of the second memory medium.

3. The apparatus of claim 1 or 2, wherein the at least one control circuit is configured to transmit the location information using the memory access scheme.

4. The apparatus of any one of claims 1 to 3, wherein the at least one control circuit is configured to:
receive a request for the location information; and
transmit the location information based on the request.

5. The apparatus of any one of claims 1 to 4, wherein the at least one control circuit is configured to:
update the location information to generate updated location information; and
perform a transmission, from the storage node, of the updated location information.

6. The apparatus of claim 5, wherein the transmission of the updated location information is caused by the storage node.

7. The apparatus of any one of claims 1 to 6, wherein the at least one control circuit is configured to:
receive a request to transfer the data; and
transfer, based on the request, from the storage node, using the memory access scheme, the data.

8. The apparatus of claim 7, wherein the request to transfer the data comprises a command.

9. The apparatus of any one of claims 1 to 8, wherein:
the storage node comprises a network adapter; and
the network adapter comprises at least a portion of the memory access scheme.

10. An apparatus comprising:
a node comprising at least one control circuit configured to:
send, from the node, data;
receive, at the node, location information for the data; and
transfer, based on the location information, using a memory access scheme, the data to the node.

11. The apparatus of claim 10, wherein the location information identifies a memory medium.

12. The apparatus of claim 11, wherein the location information identifies a location within the memory medium.

13. The apparatus of any one of claim 10 to 12, wherein the location information identifies a cache for the data.

14. The apparatus of any one of claims 10 to 13, wherein the at least one control circuit is configured to:
send, from the node, a request for the location information; and
receive, at the node, based on the request, the location information.

15. The apparatus of any one of claim 10 to 14, wherein the at least one control circuit is configured to store a data structure comprising the location information.
